# EUROPEAN PATENT APPLICATION

(11) **EP 1 775 870 A1**
(43) Date of publication of application: **18.04.2007**
(21) Application number: 05751225.3
(22) Date of filing: 13.06.2005
(51) Int. Cl.: H04L 1/00, H04L 12/56

(54) **TWO-WAY COMMUNICATION METHOD AND DEVICE, SYSTEM AND PROGRAM**

(30) Priority: 14.06.2004 JP 2004176035
(71) Applicant: NEC CORPORATION, Minato-ku, Tokyo 108-8001 (JP)
(72) Inventor: DEI, Hiroaki, NEC Corporation, Tokyo 108-8001 (JP)
(74) Representative: Glawe, Delfs, Moll
(86) International application number: PCT/JP2005/011186
(87) International publication number: WO 2005/122455

(57) **Abstract**

Two-way communication apparatuses 101 and 103 communicating with each other via a transmission line 102 have an encoding part and a decoding part, and also has at least one of a combination of an interleaver and a de-interleaver and a combination of an error correcting encoding part and an error correcting decoding part. An interleave process unit, an order of an interleave process, an error correcting encoding method, an error generation code generation unit, an encoding rate, a frame rate, and a sampling frequency can be set to be asymmetric by transmitting and receiving. It is possible to achieve communication which accords with conditions of the transmission line 102 and user's demands for a delay and a quality.

## Description

### Technical Field

The present invention relates to a two-way communication method, apparatus, system, and computer program. More specifically, the present invention relates to a two-way communication method, apparatus, system, and computer program suitable for achieving reduction of quality degradation of a medium, which is caused by a data loss produced in a transmission line, and communication with a stable quality in two-way communication for picture images, sounds, or the like via a network. Further, the present invention relates to a method, apparatus, and program which can allow setting of trade-offs of maintenance of a quality and increase of a delay in two-way communication depending upon conditions of a transmission line and user's demands for a delay/quality.

### Background Art

Recently, there has been rapidly popularized two-way communication, called VolP (Voice over IP) or TVolP (TV over IP), for communicating encoded data of picture images or sounds via a network with use of packets. Several kinds of encoding methods are used for such two-way communication. For example, methods of transmitting encoded data compressed at a high efficiency based on an interframe prediction are often used as encoding methods for moving picture images. In these methods, prediction parameters and prediction residue picture image data obtained by predicting encoded picture image data from temporally adjacent frames are encoded to reduce the amount of information of moving picture image data that are temporally correlative. Further, the prediction residue picture image data are compressed and encoded at a high efficiency by transform encoding or quantization, thereby allowing communication at a small transmission band.

The typical examples include methods using compression encoding such as MPEG (Moving Picture Experts Group)-1, MPEG-2, and MPEG-4. In these compression encoding methods, interframe prediction using motion compensation is performed on each macroblock, which is a rectangular area having a predetermined size, in input image frames. Two-dimensional discrete cosine transform and quantization are performed on the obtained motion vectors and the prediction residue picture image data to convert the compressed signal data into variable length codes.

Further, with regard to sounds, there are sound (music) encoding methods including G.722, G.729, AMR-NB (Adaptive Multi Rate-Narrow Band), AMR-WB (Adaptive Multi Rate-Wide Band), MPEG-4_AAC (Advanced Audio Codec), and the like. In each method, highly efficient encoding is conducted on a predetermined amount of a sample to thereby allow sound data to be transmitted with a high sound quality at a small transmission band.

There are many methods of distributing such encoded data of picture images or sounds to an IP (Internet Protocol) network employing a packet switching method.

Further, it is expected that mobile stations formed by PHS (Personal Handyphone System) and cellular phones or portable devices using PHS and cellular phones as communication means will henceforth develop to a two-way communication system in a mobile communication system connected to a wireless base station via a radio channel.

Technical Document 1 (M. Handley, H. Schulzrinne, E. Schooler, J. Rosenberg, "SIP: Session Initiation Protocol", RFC2543, March 1999, the Internet URL <http://www.ietf.org/rfc/rfc2543.txt>) and Technical Document 2 ( M. Handley, V. Jacobson, "SDP: Session Description Protocol", RFC2327, April 1998, the Internet URL <http://www.ietf.org/rfc/rfc2327.txt>) refer to SIP (Session Initiation Protocol)/SDP (Session Description Protocol), which will be described later. Further, Technical Document 3 (H. Schulzrinne, S. Casner, R. Frederick, V. Jacobson, "RTP: A Transport Protocol for Real-Time Applications", RFC3550, January 2003, the Internet URL <http://www.ietf. org/nfc/rfc3550.txt>) refers to RTP, which will be described later.

In conventional two-way communication, if there is a data error or a missing transmission packet in a transmission line, then received encoded data cannot be decoded correctly, so that quality degradation of a medium is caused.

Further, in order to achieve two-way communication, it is necessary to reduce a delay so as not to be larger than a predetermined value. It is difficult to request resending of lost data and to resend the data.

Furthermore, in a case where interframe prediction is used in an encoding method of picture images or sounds, once disturbance of picture images or sounds is produced, the disturbance is problematically propagated to subsequent frames.

From this point of view, there is a method of performing an interleave process before transmission to a transmission line so as to disperse burst losses produced in a wireless transmission line within an interleave process unit to thereby prevent a consecutive data loss, and a method of recovering errors or lost data with use of an error correcting code such as FEC (Forwards Error Correction). However, direct application of these methods causes an increase of a delay and has a difficulty in use in two-way communication.

Accordingly, the present invention has been made in view of the above drawbacks. A major object of the present invention is to provide a method, apparatus, system, and program which can achieve two-way communication with a possible stablest quality based on setting of trade-offs of users' demands for a quality of a medium, a delay, a band, and a delay.

Further, another object of the present invention is to provide a method, apparatus, system, and program which can achieve two-way communication capable of coping with users' demands for a quality and a delay even in a transmission line in which an up-link and a down-link are asymmetric.

Furthermore, still another object of the present invention is to provide a method, apparatus, system, and program which can achieve two-way communication capable of reducing stability of a quality and an increase of a process delay depending upon varied data errors or loss conditions in a transmission line.

### Disclosure of Invention

According to a first aspect, a communication system according to the present invention has means for capturing a medium signal, means for encoding the captured medium data, interleave process means, transmitting means to a transmission line, receiving means from the transmission line, de-interleaving means, means for decoding the encoded data, and means for playing back the decoded medium data, and may further have means for setting encoding setting of the encoding means, interleave process setting, and transmission setting of the transmitting means, and means for communicating at least one of the encoding setting, the interleave process setting, the transmission setting, and a receiving status of the encoded data. The communication system encodes and transmits the captured signal of a medium, and receives, decodes, and plays back the encoded data.

According to a second aspect, a communication system according to the present invention has means for capturing a medium signal, means for encoding the captured medium data, means for generating error correcting code data from the encoded data, transmitting means to a transmission line, receiving means from the transmission line, means for recovering data with the error correcting code when the received encoded data have an error or a missing part, means for decoding the encoded data, and means for playing back the decoded medium data, and may further have means for setting encoding setting of the encoding means, error correcting code data generation process setting, and transmission setting of the transmitting means, and means for communicating at least one of the encoding setting, the error correcting code data generation process setting, the transmission setting, and a receiving status of the encoded data. The communication system encodes and transmits the captured signal of a medium, and receives, decodes, and plays back the encoded data.

According to a third aspect, a communication system according to the present invention has at least two communication apparatuses for communicating with each other via a transmission line. At least one of the two communication apparatuses has encoding means for encoding an inputted medium, interleaving means for performing an interleave process on the encoded data with a predetermined unit, and transmitting means for transmitting the interleaved encoded data to the transmission line. At least another of the two communication apparatuses has receiving means for receiving the encoded data from the transmission line, de-interleaving means for rearranging the encoded data that have been subjected to the interleave process and received into an original order with a predetermined method, decoding means for decoding the encoded data and outputting the decoded data, and playback means for playing back the decoded data.

According to a fourth aspect, a communication method according to the present invention includes a step of encoding an inputted medium, a step of interleaving the encoded data with a predetermined unit, a step of outputting the interleaved encoded data, a step of receiving the encoded data, a step of de-interleaving the received encoded data with a predetermined method, and a step of decoding and playing back the encoded data.

According to a fifth aspect, a computer program according to the present invention includes a program for executing a procedure with a computer (processor) constituting a two-way communication apparatus. The procedure includes a process of encoding an inputted medium, a process of interleaving the encoded data with a predetermined unit, a process of outputting the interleaved encoded data, a process of receiving the encoded data, a process of de-interleaving the received encoded data with a predetermined method, and a process of decoding and playing back the encoded data.

In the present invention, the encoded data to be transmitted and the encoded data to be received may be different from each other in at least one of items including:
A) existence of the interleave process,
B) a unit of the interleave process,
C) an order of the interleaving,
D) a bit rate,
E) a frame rate, and
F) a sampling frequency.

In the present invention, at least one of items of the encoded data including:
A) existence of the interleave process,
B) a unit of the interleave process,
C) an order of the interleaving,
D) a frame rate, and
E) a sampling frequency
may be set by at least one of items including an available band in a transmission line, a data loss pattern in the transmission line, and a user's demand inputted via input means.

In the present invention, at least one of setting information including:
A) existence of the interleave process,
B) a unit of the interleave process,
C) an order of the interleaving,
D) a bit rate,
E) a frame rate, and
F) a sampling frequency
may be communicated to a correspondent by a call connection process.

In the present invention, at least one of setting information including:
A) existence of the interleave process,
B) a unit of the interleave process,
C) an order of the interleaving,
D) a bit rate,
E) a frame rate, and
F) a sampling frequency
may be obtained from a correspondent by a call connection process to decode the received encoded data.

In the present invention, an arrival status of received data including a loss ratio of the received encoded data and a burst length may be transmitted to a correspondent, and
at least one of items of encoded data to be transmitted including:
A) existence of the interleave process,
B) a unit of the interleave process,
C) an order of the interleaving,
D) a bit rate,
E) a frame rate, and
F) a sampling frequency
may be reset in accordance with the arrival status when the arrival status is received from the correspondent.

In the present invention, a sequence number indicative of an order of the encoded data may be provided, or the encoded data may be transmitted in accordance with a format which allows an order of the encoded data to be recognized.

In the present invention, the communication method may include:
a step of generating error correcting code data from the encoded data with a predetermined unit;
a step of outputting at least a portion of at least one of the encoded data and the error correcting code data;
a step of receiving at least a portion of at least one of the encoded data and the error correcting code data;
a step of recovering lost encoded data from at least one of satisfactorily received encoded data and satisfactorily received error correcting code data when the received encoded data has a loss; and
a step of decoding the encoded data.

In the present invention, the error correcting code data to be transmitted and the error correcting code data to be received may be different from each other in at least one of items including:
A) an error correcting encoding method,
B) existence of transmission of the error correcting code data,
C) a bit rate of the error correcting code data, and
D) a unit of error correcting code data generation.

In the present invention, at least one of items of the error correcting code data including:
A) an error correcting encoding method,
B) existence of transmission of the error correcting code data,
C) a bit rate of the error correcting code data, and
D) a unit of error correcting code data generation may be set by at least one of items including:
   an available band in a transmission line,
   a data loss pattern in the transmission line, and
   a user's demand inputted via input means.

In the present invention, at least one of setting information including:
A) an error correcting encoding method,
B) existence of transmission of the error correcting code data,
C) a bit rate of the error correcting code data, and
D) a unit of the error correcting code data generation
may be communicated to a correspondent by a call connection process.

In the present invention, at least one of setting information of a correspondent including:
A) an error correcting encoding method,
B) existence of transmission of the error correcting code data,
C) a bit rate of the error correcting code data, and
D) a unit of the error correcting code data generation
may be obtained by a call connection process to recover the encoded data when the encoded data has a loss.

In the present invention, an arrival status of received data including a loss ratio and a burst length may be transmitted to a correspondent, and
at least one of items of error correcting code data to be transmitted including:
A) an error correcting encoding method,
B) existence of transmission of the error correcting code data,
C) a bit rate of the error correcting code data, and
D) a unit of the error correcting code data generation
may be reset in accordance with the arrival status when the arrival status is received.

In the present invention, a corresponding relationship of identifiers for identifying the encoded data and the error correcting code data may be communicated to a correspondent, and
the identifiers corresponding to the encoded data and the error correcting code data may be provided and transmitted.

### Brief Description of Drawings

FIG. 1 is a diagram showing a system configuration of first and second embodiments of the present invention;
FIG. 2 is a diagram showing an arrangement of a two-way communication apparatus in the first embodiment of the present invention;
FIG. 3 is a diagram explanatory of a process of the two-way communication apparatus in the first embodiment of the present invention;
FIG. 4 is a diagram showing an arrangement of a two-way communication apparatus in the second embodiment of the present invention;
FIG. 5 is a diagram explanatory of a process of the two-way communication apparatus in the second embodiment of the present invention; and
FIG. 6 is a diagram showing a variation of the two-way communication apparatus in the second embodiment of the present invention.

### Best Mode for Carrying Out the Invention

### [First embodiment]

Preferred embodiments of the present invention will be described below. A communication system according to a first embodiment of the present invention has a means (203) for capturing a signal of a medium, an encoding means (204) for encoding the captured medium data, an interleave process means (206), a transmitting means (207) to a transmission line, a receiving means (208) from the transmission line, a de-interleave process means (209), a decoding means (211) for decoding the encoded data, and a means (212) for playing back the decoded medium data. Further, the communication system has a means (202) for determining encoding setting of the encoding means (204), interleave process setting of the interleave process means (206), and transmission setting of the transmitting means (207), and a means (202) for communicating at least one of the encoding setting, the interleave process setting, the transmission setting, and a receiving status of the encoded data. The communication system encodes and transmits the captured signal of a medium, and receives, decodes, and plays back the encoded data.

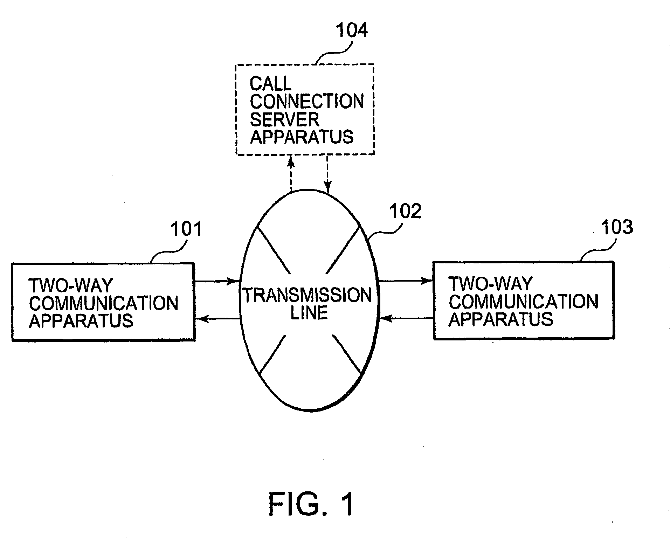

FIG. 1 is a diagram showing a system configuration of the first embodiment of the present invention. As shown in FIG. 1, the system in the first embodiment of the present invention has two-way communication apparatuses and a transmission line and may include a call connection server. In the present embodiment, a two-way communication apparatus 101, a two-way communication apparatus 103, and a call connection server apparatus 104 are connected to a transmission line 102 of an IP (Internet Protocol) network. It is assumed that the two-way communication apparatuses 101 and 103 are terminals for transmitting and receiving encoded data and call connection data by packet switching, and that the call connection server apparatus 104 is a terminal for processing call connection data, for example, in accordance with SIP (Session Initiation Protocol)/SDP (Session Description Protocol) so as to establish communication between the two-way communication apparatus 101 and the two-way communication apparatus 103 (see Non-patent Documents 1 and 2 as to SIP/SDP). The call connection server apparatus 104 is unnecessary if the two-way communication apparatus 101 and the two-way communication apparatus 103 have already known an IP address of the correspondent apparatus, a receiving port number of encoded data, an encoding method, or an encoding option of a medium to be transmitted and received.

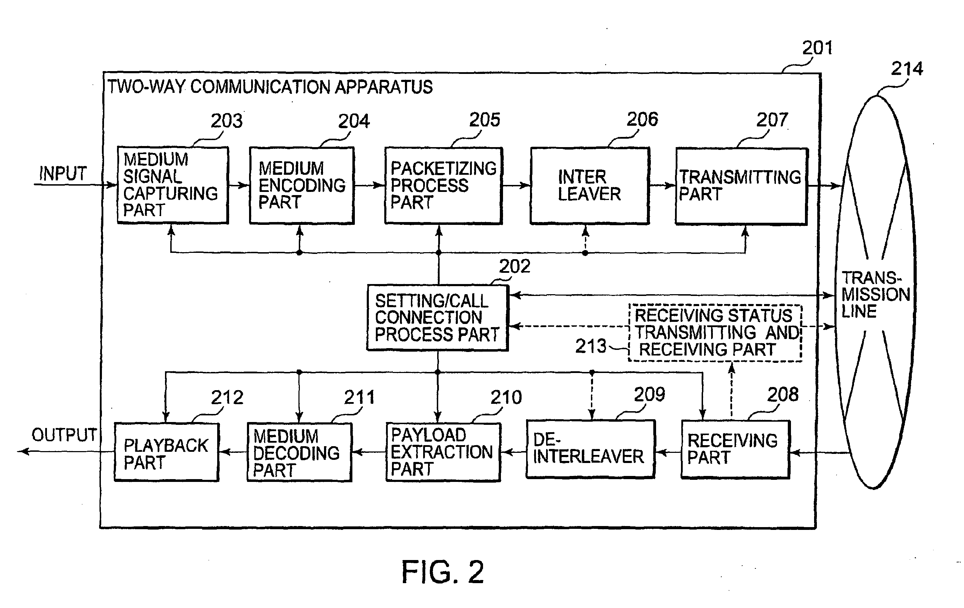

FIG. 2 is a diagram showing an arrangement of the two-way communication apparatus 101 or 103 in FIG. 1. The two-way communication apparatuses 101 and 103 have the same arrangement in FIG. 2. Only one two-way communication apparatus (reference numeral 201) is illustrated in FIG. 2. As shown in FIG. 2, the two-way communication apparatus 201 has a setting/call connection process part 202, a medium signal capturing part 203, a medium encoding part 204, a packetizing process part 205, an interleaver 206, a transmitting part 207, a receiving part 208, a de-interleaver 209, a pay load extraction part 210, a medium decoding part 211, and a playback part 212.

For example, picture images or voice signals from a camera, a microphone, or the like, which is not shown in the drawings, are subjected to an analog-digital conversion and captured by the medium signal capturing part 203. The conversion is performed based on the following items set by the setting/call connection process part 202 and communicated to the correspondent two-way communication apparatus, or alternatively on the following preset items.
· Frame rate
· Sampling frequency
· Quantization bit length

The captured medium data are encoded by the medium encoding part 204 based on the following encoding setting that has been set by the setting/call connection process part 202 and communicated to the correspondent two-way communication apparatus, or alternatively on the following preset encoding setting.
· Encoding method
· Bit rate
· Encoding options such as data partitioning or existence of a resynchronization marker in an MPEG-4 encoding method or RVLC (Reversible Variable Length Code)

The encoded data are provided with a sequence number so that the order of the encoded data can be recognized, and packetized by the packetizing process part 205, in accordance with a medium data unit and a pay load format set by the setting/call connection process part 202 or a preset medium data unit and a preset pay load format.

Here, for example, when packetizing is conducted based on RTP (Real-time Transport Protocol), a sequence number contained in an RTP header can show the order of the encoded data (see Non-patent Document 3 as to RTP).

The packetized encoded data are outputted from the transmitting part 207 to the transmission line 214 toward a destination address and port communicated from the correspondent two-way communication apparatus or a preset destination address and port.

The two-way communication apparatus 201 receives a packet from the transmission line 214 with the receiving part 208 at a port determined by the setting/call connection process part 202 or a preset port. The de-interleaver 209 rearranges the packet subjected to an interleave process based on the sequence number provided to the packet.

The pay load extraction part 210 extracts the encoded data from the packet rearranged by the de-interleaver 209, and the encoded data are decoded by the medium decoding part 211 based on the following items communicated from the correspondent two-way communication apparatus obtained by the setting/call connection process part 202 or on the following preset items.
· Medium encoding method
· Encoding option

Further, the packet is played back based on the following items communicated from the correspondent two-way communication apparatus obtained by the setting/call connection process part 202 or on the following preset items.
· Frame rate
· Sampling frequency
· Quantization bit length

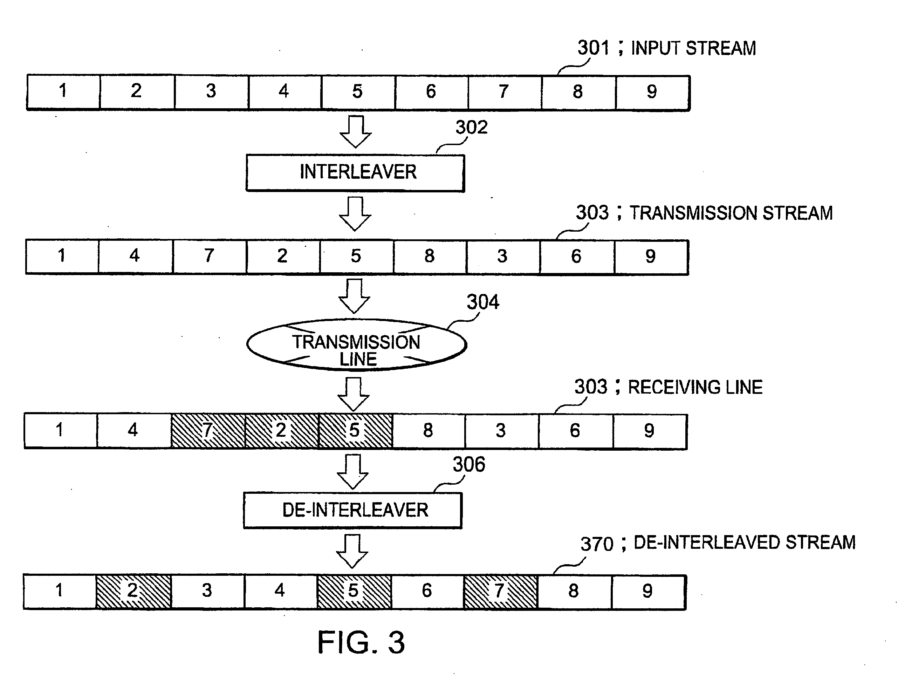

FIG. 3 is an explanation diagram explanatory of processes in the interleaver 206 and the de-interleaver 209 of the present embodiment. Processes in the interleaver 206 and the de-interleaver 209 shown in FIG. 2 will be described below with reference to FIG 3.

As shown in FIG. 3, an input stream 301 formed by encoded data is interleaved into, for example, a transmission stream 303 by the interleaver 302. In this case, the interleave process unit is "9," and the interleave process is performed for every 9 encoded data. This results in a process delay. The aforementioned unit and order of the interleave process are described by way of example, and the unit and order of the interleave process are not limited to the aforementioned preset values. The transmission stream 303 is transmitted to the correspondent via the transmission line 304.

If a burst data error or loss of the transmission stream is produced in transmission line 304, then the correspondent apparatus receives a stream such as a receiving stream 305. Here, the encoded data 7, 2, and 5 in the receiving stream 305 represent that data errors or losses were produced in the transmission line.

The de-interleaver 306 rearranges the encoded data into an original order so as to obtain a de-interleaved stream 307. As a result, the burst data errors/losses are dispersed so as to reduce quality degradation of the medium as compared to consecutive data errors/losses.

This is particularly effective in sound encoded data. Degradation of a quality of long-time sounds due to consecutive data errors/losses is interspersed so as to be unlikely to be perceived auditorily.

It is more effective to set the interleave process unit to be longer than a burst length of a data error or loss that is produced in the transmission line. Specifically, by increasing the interleave process unit, it is possible to widen a width so as to cope with a burst length of a data error or loss in the transmission line. However, when the interleave process unit is increased, a process delay increases. Accordingly, when a quality required for a medium to be played back is different between a pair of two-way communication apparatuses, it is possible to reduce a delay by setting the interleave process size so as to accord with a quality required by the correspondent.

For example, in FIG. 1, when a quality required for a medium to be played back by the two-way communication apparatus 101 is high while a quality required for a medium to be played back by the two-way communication apparatus 103 is low, the interleave process unit is made small in the two-way communication apparatus 101 or no interleave process is performed in the two-way communication apparatus 101. In the two-way communication apparatus 103, the interleave process unit is set so as to cope with a burst length of a data error/loss in the transmission line 102. Thus, it is possible to reduce reciprocative delays while the quality required for medium playback is met in both apparatuses.

Further, it is desirable that the interleave process unit is changed depending upon a transmission line. Accordingly, in the following cases, it is possible to stabilize a quality and reduce a delay by setting the interleave process units to be asymmetric.
· Different transmission lines are used for an up-link and a down-link.
· An up-link and a down-link have different data error/loss characteristics.

Similarly, a frame rate at which picture images are captured or a sampling frequency at which sounds are captured may be increased in the medium signal capturing part 203 in order to reduce a delay.

When a frame rate of picture images is increased, a picture quality per frame played back by the correspondent two-way communication apparatus is lowered but a delay is reduced unless a bit rate is changed.

Further, for example, in a case where sounds are encoded with AAC, if a sampling frequency of sounds is increased, the encoded data unit per time is increased to thereby increase an overhead. A bit rate assigned to a medium is still lowered unless a bit rate is changed. A quality of sounds played back by the correspondent two-way communication apparatus is lowered but a delay is reduced.

Accordingly, as with the interleave process unit, it is possible to perform communication with setting of trade-offs of demands for a quality and a delay by setting the following items so as to accord with a quality required by the correspondent and communicating the correspondent two-way communication apparatus with the setting/call connection process part 202.
· Frame rate of picture images
· Sampling frequency of sounds

Further, it is possible to change the interleave process unit during the communication by communicating statistical information of the following items of the encoded data, received by the receiving part 208, to the correspondent two-way communication apparatus with SR (Sender Report) or RR (Receiver Report) of RTCP (RTP Control Protocol) by the receiving status transmitting and receiving part 213 (see Non-patent Document 3 as to RTCP).
· Data error/loss ratio
· Error/loss burst length

Here, the interleave process unit can readily be changed by adjusting a break of the interleave unit on the transmitting side, and the size of the interleave process unit can be increased by increasing an interleave buffer on the receiving side. However, with regard to reduction of the size on the receiving side, the size should be changed such that interruption of playback sounds is reduced as much as possible. Accordingly, if the last of a buffer in the de-interleaver 209 is empty, then reduction is conducted from that empty portion. If the buffer is filled with received data, then reduction is conducted from received data that are silent or have a level close to silence, so that it is possible to change the buffer size while interruption of sounds is reduced.

As a result, even in a transmission line having a varied data error /loss pattern, it is possible to achieve effective stabilization of a quality of a medium and reduction of a delay.

In a case where a data error may occur but a data loss or a rearrangement of the order of the packet data do not occur in the transmission line 214, the provision of a sequence number is unnecessary in the packetizing process part 205 if an interleave order in the interleaver 206 is communicated from the setting/call connection process part 202 to the correspondent two-way communication apparatus or is predetermined.

Further, in some encoding methods, such as AMR, an interleave/de-interleave process may be included in a mechanism of a pay load format process. In such a case, the interleaver 206 and the de-interleaver 209 are unnecessary. In this case, the interleave process unit is described in a=fmtp attribute of SDP with "interleaving =" and communicated to the correspondent.

Further, as a matter of course, functions and processes of the setting/call connection process part 202, the medium signal capturing part 203, the medium encoding part 204, the packetizing process part 205, the interleaver 206, the transmitting part 207, the receiving part 208, the de-interleaver 209, the pay load extraction part 210, the medium decoding part 211, and the playback part 212 in the two-way communication apparatus 201 can be implemented by a program control executed in a computer constituting the two-way communication apparatus 201.

### [Second embodiment]

A communication system according to a second embodiment of the present invention has a means (203) for capturing a signal of a medium, a means (204) for encoding the captured medium data, a means (403) for generating error correcting code data from the encoded data, a transmitting means (207) to a transmission line, a receiving means (208) from the transmission line, a means (404) for recovering received encoded data with an error correcting code when the data has an error or a missing part, a means (211) for decoding the encoded data, and a means (212) for playing back the decoded medium data. Further, the communication system may have a means (402) for determining encoding setting of the encoding means (204), error correcting code data generation process setting, and transmission setting of the transmitting means (207), and a means (402) for communicating at least one of the encoding setting, the error correcting code data generation process setting, the transmission setting, and a receiving status of the encoded data. The captured signal of the medium is encoded and transmitted. The received encoded data is decoded and played back.

Next, the second embodiment of the present invention will be described below in detail only with regard to portions different from the aforementioned first embodiment with reference to the drawings.

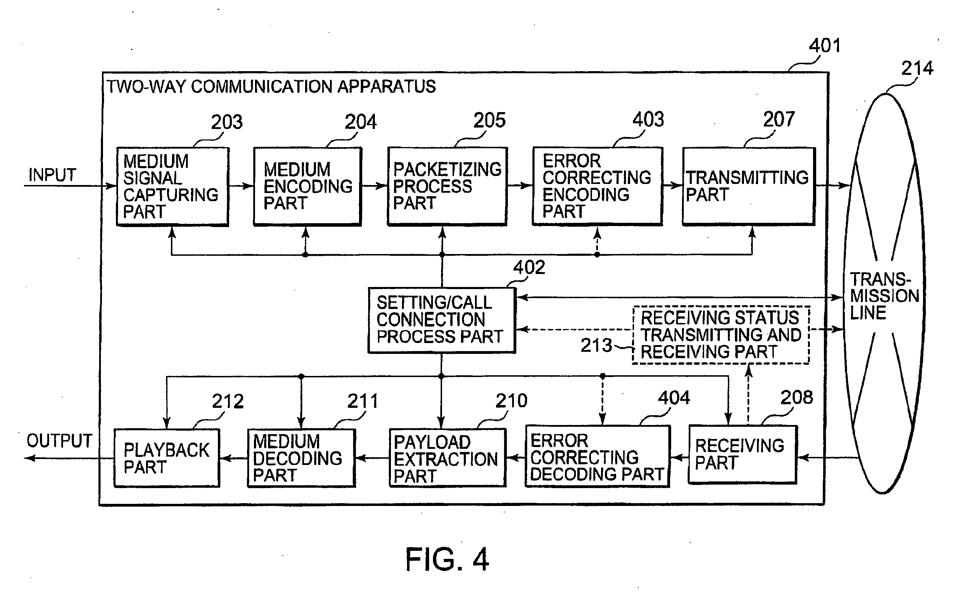

FIG. 4 is a diagram showing an arrangement of a two-way communication apparatus (101 or 103 in FIG. 1) according to the second embodiment of the present invention. As shown in FIG. 4, the two-way communication apparatus 401 according to the present embodiment has an error correcting encoding part 403 and an error correcting decoding part 404 instead of the interleaver 206 and the de-interleaver 209 of the two-way communication apparatus 201 according to the first embodiment shown in FIG. 2. The present embodiment will be described so as to mainly focus on differences from the first embodiment shown in FIG. 2, and the same portions will be omitted according to circumstances.

The error correcting encoding part 403 generates error correcting code data from packetized encoded data based on an error correcting encoding method and error correcting code data generation unit set by the setting/call connection process part 402 and communicated to the correspondent two-way communication apparatus or on a preset error correcting encoding method and error correcting code data generation unit, and outputs the error correcting code data from the transmitting part 207 to the transmission line 214 together with the encoded data. For example, an LDPC (Low Density Parity Check) method or a code called FEC (Forward Error Correction), such as a Reed-Solomon code, is generally used in an error correcting encoding method. Such an error correcting code employs existing technology, and hence details thereof will be omitted.

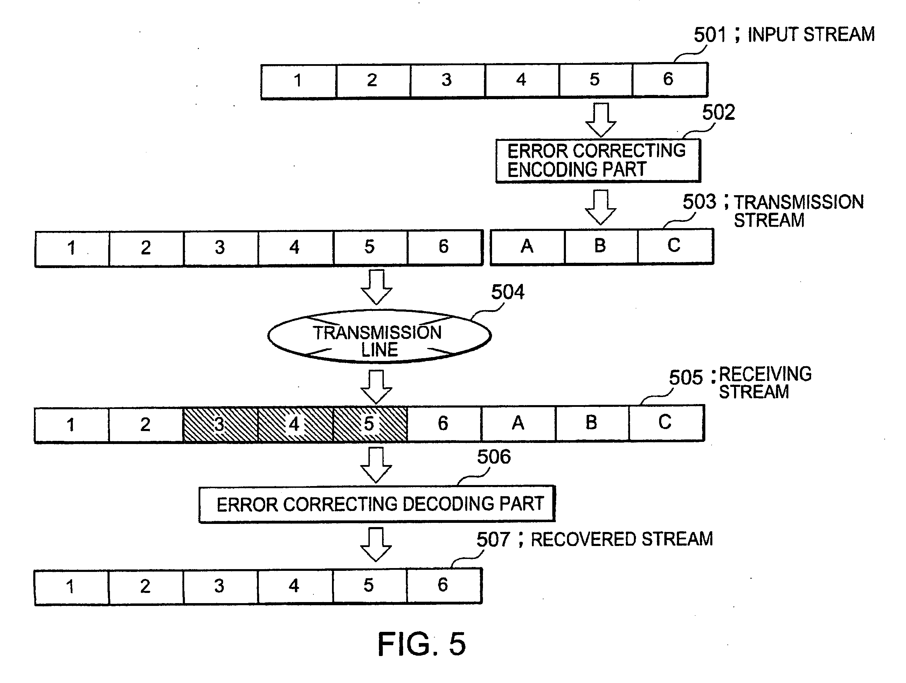

FIG. 5 is an explanation diagram explanatory of processes in the error correcting encoding part 403 and the error correcting decoding part 404 of the present embodiment. Next, processes in the error correcting encoding part 403 and the error correcting decoding part 404 shown in FIG. 4 will be described below with reference to FIG. 5. Here, an LDPC method is used as an example of the error correcting encoding method, but the error correcting encoding method is not limited to an LDPC method as a matter of course.

As shown in FIG. 5, the error correcting encoding part 502 generates an error correcting code from an input stream 501 formed by encoded data, so that a stream to be transmitted to the transmission line 504 becomes a stream such as a transmission stream 503. Here, the unit to generate an error correcting code is "6," and the error correcting encoding process is performed for every 6 encoded data. This results in a process delay.

Further, in the present embodiment, three error correcting code data units are generated from six encoded data units. However, the number of error correcting data in each error correcting code generation unit is illustrated by way of example and is not limited to the illustrated example as a matter of course.

The transmission stream 503 is transmitted to the correspondent via the transmission line 504.

If the transmission line 504 is, for example, a wireless transmission line and a data error or loss is produced therein, then the correspondent receives a stream such as a receiving stream 505. Here, the encoded data 3, 4, and 5 in the receiving stream 505 represent that data errors or losses were produced in the transmission line.

The error correcting decoding part 506 recovers the encoded data 3, 4, and 5 having data errors/losses from the encoded data and the error correcting code data satisfactorily received. As a result, an influence from the errors/losses in the transmission line is eliminated, and it is possible to perform a playback with an original quality of the medium.

For example, if a packetizing process based on RTP (Real-time Transport Protocol) is used to distinguish between the encoded data of the medium and the error correcting code data in the receiving stream 505, a pay load type contained in an RTP header, SSRC (Synchronization Source identifier), or CSRC (Contributing Source identifier) can be used as an identifier. Different values are set for the encoded data of the medium and the error correcting code data, and a combination of types and values of the data is communicated to the correspondent. Thus, it is possible to identify the encoded data of the medium and the error correcting code data in the error correcting decoding part 506.

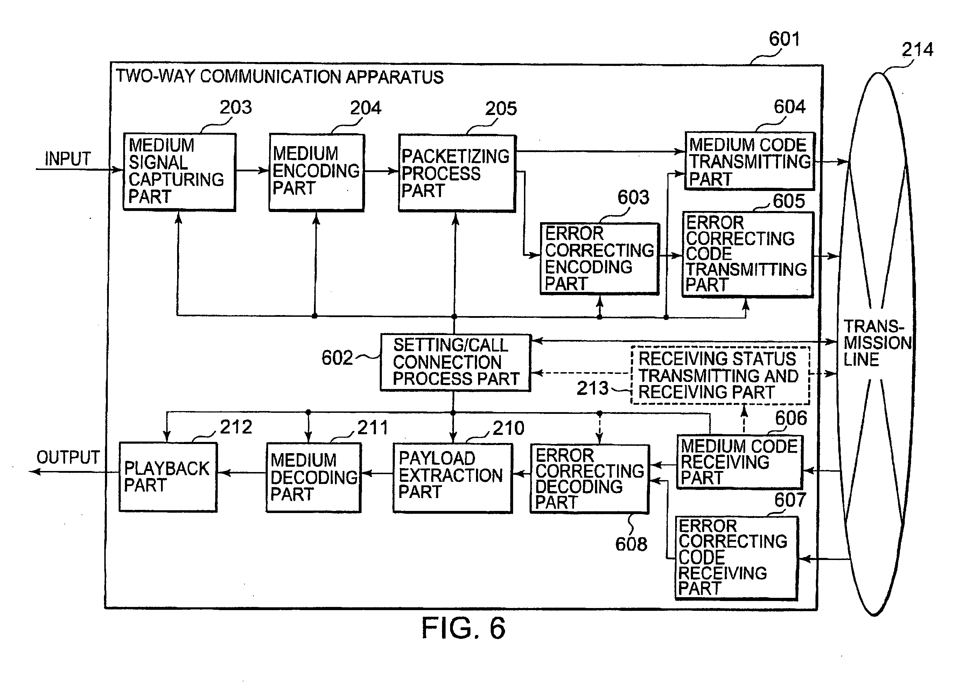

FIG. 6 is a diagram showing a variation of the present embodiment shown in FIG. 4. As shown in FIG. 6, a two-way communication apparatus 601 transmits encoded data of a medium and error correcting code data via separate sessions or separate transmission lines from a medium code transmitting part 604 and an error correcting code transmitting part 605, respectively. Both encoded data may be received from a medium code receiving part 606 and an error correcting code receiving part 607, and medium encoded data influenced by an error or loss may be recovered by an error correcting decoding part 608. In this case, it is possible to determine the types of the data from the transmitted and received sessions or the transmission lines without an identifier for identifying the medium encoded data and the error correcting code data.

Further, in some error correcting encoding methods, only error correcting code data may be transmitted without transmission of encoded data of a medium. In such an encoding method, medium encoded data transmitted and received between the medium code transmitting part 604 and the medium code receiving part 606 are unnecessary.

Here, it is effective to prepare a check matrix for checking error correcting code data with an LDPC method so as to accord with a pattern of data errors or losses produced in the transmission line. Further, the amount of error correcting code data to encoded data of a medium and a unit to generate the error correcting code data are determined by the check matrix.

A process delay by an error correcting code data generation unit is needed to generate error correcting code data. By increasing the generation unit, it is possible to enhance a ratio of recovery from data errors/losses with a smaller amount of error correcting code data. However, on the other hand, a delay increases. Accordingly, when a quality required for a medium to be played back is different between a pair of two-way communication apparatuses, it may be possible to reduce a delay by setting the check matrix so as to accord with a quality required by the correspondent.

For example, in FIG. 1, when a quality required for a medium to be played back by the two-way communication apparatus 101 is high while a quality required for a medium to be played back by the two-way communication apparatus 103 is low, the check matrix is set so as to decrease the error correcting code generation unit in the two-way communication apparatus 101 or no error correcting code data generation process is performed in the two-way communication apparatus 101. In the two-way communication apparatus 103, the generated amount of error correcting code data and the check matrix for the generation unit are appropriately set so as to accord with a pattern of data errors/losses in the transmission line 102. Thus, it is possible to reduce reciprocative delays while a quality required for medium playback is met in both apparatuses.

Further, when a transmission band is limited, it is possible to determine trade-offs between the stability of a quality of a medium and a degree of the quality by changing encoding of a medium and assignment of a bit rate in error correcting code data. This can be set according to a quality required for a medium to be played back by the respective two-way communication apparatuses.

As described above, it is desirable that setting of the check matrix is changed depending upon transmission lines. Accordingly, when different transmission lines are used for an up-link and a down-link, or when an up-link and a down-link have different data error/loss characteristics, it is possible to stabilize a quality and reduce a delay by setting the check matrix to be asymmetric.

In the present embodiment, a frame rate at which picture images are captured and a sampling frequency at which sounds are captured are the same as the first embodiment.

Further, it is possible to grasp error/loss characteristics of the transmission line by communicating statistical information of a data error/loss ratio and an error/loss burst length of encoded data received by the receiving part 208 to the correspondent two-way communication apparatus with, for example, SR (Sender Report) or RR (Receiver Report) of RTCP (RTP Control Protocol). Thus, by communicating the statistical information to the correspondent two-way communication apparatus via the setting/call connection process part 202,
an error correcting encoding method can be changed during the communication,
a check matrix can be changed during the communication, i.e., a bit rate of error correcting code data and a unit to generate the error correcting code data can be changed, and
transmission of the error correcting code data can be stopped/restarted.

For example, when conditions of a transmission line are so good that encoded data of a medium can be transmitted and received with a sufficient high quality, transmission of the error correcting code may be stopped. When the conditions of the transmission line deteriorate, transmission of the error correcting code may be restarted.

Further, the error correcting code data may be transmitted selectively. Thus, it is possible to achieve effective stabilization of a quality of a medium and reduction of a delay even in a transmission line having a varied data error/loss pattern.

In the two-way communication apparatus of the present embodiment, the interleave process (interleaver 206) and the de-interleave process (de-interleaver 209), which have been described in the first embodiment shown in FIG. 2, may be combined with each other.

Further, functions and processes of the setting/call connection process part 402, the medium signal capturing part 203, the medium encoding part 204, the packetizing process part 205, the error correcting encoding part 403, the transmitting part 207, the receiving part 208, the error correcting decoding part 404, the pay load extraction part 210, the medium decoding part 211, and the playback part 212 in the two-way communication apparatus 401 can be implemented by a program control executed in a computer constituting the two-way communication apparatus 401. For example, the two-way communication apparatus 401 constitutes a voice communication apparatus.

Furthermore, functions and processes of the setting/call connection process part 602, the medium signal capturing part 203, the medium encoding part 204, the packetizing process part 205, the error correcting encoding part 603, the medium code transmitting part 604, the error correcting code transmitting part 605, the medium code receiving part 606, the error correcting code receiving part 607, the error correcting decoding part 608, the pay load extraction part 210, the medium decoding part 211, and the playback part 212 in the two-way communication apparatus 601 can be implemented by a program control executed in a computer constituting the two-way communication apparatus 601. For example, the two-way communication apparatus 601 constitutes a voice communication apparatus.

Although the present invention has been described with the above embodiments, the present invention is not limited to the arrangement in the above embodiments. As a matter of course, the present invention includes various changes and modifications which would be made by those skilled in the art without departing from the scope of the present invention.

According to the present invention, it is possible to achieve two-way communication with a possible stablest quality based on setting of trade-offs of user's demands for a quality of a medium, a delay, and a band, and a delay.

Further, according to the present invention, it is possible to achieve two-way communication capable of coping with user's demands for a quality and a delay even in a transmission line in which an up-link and a down-link are asymmetric.

Furthermore, according to the present invention, it is possible to achieve the stability of a quality and two-way communication capable of reducing an increase of a process delay depending upon varied data errors/losses in a transmission line.

## Claims

1. A two-way communication method **characterized by** comprising:
a step of encoding an inputted medium;
a step of interleaving the encoded data with a predetermined unit;
a step of outputting the interleaved encoded data;
a step of receiving the encoded data;
a step of de-interleaving the received encoded data with a predetermined method; and
a step of decoding and playing back the encoded data.

2. The two-way communication method according to claim 1, **characterized in that** the encoded data to be transmitted and the encoded data to be received are different from each other in at least one of items including:
A) existence of the interleave process,
B) a unit of the interleave process,
C) an order of the interleaving,
D) a bit rate,
E) a frame rate, and
F) a sampling frequency.

3. The two-way communication method according to claim 1 or 2, **characterized in that** at least one of items of the encoded data including:
A) existence of the interleave process,
B) a unit of the interleave process,
C) an order of the interleaving,
D) a frame rate, and
E) a sampling frequency
is set by at least one of items including:
an available band in a transmission line,
a data loss pattern in the transmission line, and
a user's demand inputted via input means.

4. The two-way communication method according to any one of claims 1 to 3, **characterized in that** at least one of setting information including:
A) existence of the interleave process,
B) a unit of the interleave process,
C) an order of the interleaving,
D) a bit rate,
E) a frame rate, and
F) a sampling frequency
is communicated to a correspondent by a call connection process.

5. The two-way communication method according to any one of claims 1 to 4, **characterized in that** at least one of setting information including:
A) existence of the interleave process,
B) a unit of the interleave process,
C) an order of the interleaving,
D) a bit rate,
E) a frame rate, and
F) a sampling frequency
is obtained from a correspondent by a call connection process to decode the received encoded data.

6. The two-way communication method according to any one of claims 1 to 4, **characterized in that** an arrival status of received data including a loss ratio of the received encoded data and a burst length is transmitted to a correspondent, and
at least one of items of encoded data to be transmitted including:
A) existence of the interleave process,
B) a unit of the interleave process,
C) an order of the interleaving,
D) a bit rate,
E) a frame rate, and
F) a sampling frequency
is reset in accordance with the arrival status when the arrival status is received.

7. The two-way communication method according to any one of claims 1 to 6, **characterized in that** a sequence number indicative of an order of the encoded data is provided, or the encoded data is transmitted in accordance with a format which allows an order of the encoded data to be recognized.

8. The two-way communication method according to any one of claims 1 to 5, **characterized by** comprising:
a step of generating error correcting code data from the encoded data with a predetermined unit;
a step of outputting at least a portion of at least one of the encoded data and the error correcting code data;
a step of receiving at least a portion of at least one of the encoded data and the error correcting code data;
a step of recovering lost encoded data from at least one of satisfactorily received encoded data and satisfactorily received error correcting code data when the received encoded data has a loss; and
a step of decoding the encoded data.

9. The two-way communication method according to claim 8, **characterized in that** the error correcting code data to be transmitted and the error correcting code data to be received are different from each other in at least one of items including:
A) an error correcting encoding method,
B) existence of transmission of the error correcting code data,
C) a bit rate of the error correcting code data, and
D) a unit of the error correcting code data generation.

10. The two-way communication method according to claim 8 or 9, **characterized in that** at least one of items of the error correcting code data including:
A) an error correcting encoding method,
B) existence of transmission of the error correcting code data,
C) a bit rate of the error correcting code data, and
D) a unit of the error correcting code data generation
is set by at least one of items including:
an available band in a transmission line,
a data loss pattern in the transmission line, and
a user's demand inputted via input means.

11. The two-way communication method according to any one of claims 8 to 10, **characterized in that** at least one of setting information including:
A) an error correcting encoding method,
B) existence of transmission of the error correcting code data,
C) a bit rate of the error correcting code data, and
D) a unit of the error correcting code data generation
is communicated to a correspondent by a call connection process.

12. The two-way communication method according to any one of claims 8 to 11, **characterized in that** at least one of setting information of a correspondent including:
A) an error correcting encoding method,
B) existence of transmission of the error correcting code data,
C) a bit rate of the error correcting code data, and
D) a unit of the error correcting code data generation
is obtained by a call connection process to recover the encoded data when the encoded data has a loss.

13. The two-way communication method according to any one of claims 8 to 12, **characterized in that** an arrival status of received data including a loss ratio and a burst length is transmitted to a correspondent, and
at least one of items of error correcting code data to be transmitted including:
A) an error correcting encoding method,
B) existence of transmission of the error correcting code data,
C) a bit rate of the error correcting code data, and
D) a unit of the error correcting code data generation
is reset in accordance with the arrival status when the arrival status is received.

14. The two-way communication method according to any one of claims 8 to 13, **characterized in that** a corresponding relationship of identifiers for identifying the encoded data and the error correcting code data is communicated to a correspondent, and
the identifiers corresponding to the encoded data and the error correcting code data are provided and transmitted.

15. The two-way communication method according to any one of claims 2 to 6, **characterized in that** when the unit of the interleave process is changed,
on a transmitting side of the encoded data, a break of the interleave unit is changed, and
on a receiving side of the encoded data, a size of a buffer for storing the encoded data is varied, the buffer is increased to increase a size of the unit of the interleave process, and the size of the buffer is changed to decrease the size of the unit of the interleave process so that interruption of playback signals is reduced.

16. The two-way communication method according to claim 15, **characterized in that** the encoded data include sound encoded data, and
on the receiving side of the encoded data, if the buffer has an empty portion, then reduction is conducted from the empty portion, and if the buffer is filled with received encoded data, then reduction is conducted from received data that are silent or have a level close to silence, whereby interruption of sounds is reduced.

17. A two-way communication apparatus **characterized by** comprising:
encoding means for encoding and outputting an inputted medium;
interleaving means for performing an interleave process on the encoded data from the encoding means with a predetermined unit;
transmitting means for transmitting the encoded data rearranged by the interleaving means;
receiving means for receiving the encoded data;
de-interleaving means for rearranging the encoded data that have been subjected to the interleave process and received by the receiving means into an original order;
decoding means for decoding the encoded data from the de-interleaving means and outputting the decoded data; and
playback means for playing back the decoded data from the decoding means.

18. The two-way communication apparatus according to claim 17, **characterized in that** the encoded data to be transmitted and the encoded data to be received are different from each other in at least one of items including:
A) existence of the interleave process,
B) a unit of the interleave process,
C) an order of the interleaving,
D) a bit rate,
E) a frame rate, and
F) a sampling frequency.

19. The two-way communication apparatus according to claim 17 or 18, **characterized in that** at least one of items of the encoded data including:
A) existence of the interleave process,
B) a unit of the interleave process,
C) an order of the interleaving,
D) a frame rate, and
E) a sampling frequency
is set by at least one of items including:
an available band in a transmission line,
a data loss pattern in the transmission line, and
a user's demand inputted via input means.

20. The two-way communication apparatus according to any one of claims 17 to 19, **characterized by** comprising means for communicating at least one of setting information including:
A) existence of the interleave process,
B) a unit of the interleave process,
C) an order of the interleaving,
D) a bit rate,
E) a frame rate, and
F) a sampling frequency
to a correspondent by a call connection process.

21. The two-way communication apparatus according to any one of claims 17 to 20, **characterized by** comprising means for obtaining at least one of setting information including:
A) existence of the interleave process,
B) a unit of the interleave process,
C) an order of the interleaving,
D) a bit rate,
E) a frame rate, and
F) a sampling frequency
from a correspondent by a call connection process to decode the received encoded data.

22. The two-way communication apparatus according to any one of claims 17 to 20, **characterized by** comprising:
means for transmitting an arrival status of received data including a loss ratio of the received encoded data and a burst length to a correspondent; and
means for resetting at least one of items of encoded data to be transmitted including:
A) existence of the interleave process,
B) a unit of the interleave process,
C) an order of the interleaving,
D) a bit rate,
E) a frame rate, and
F) a sampling frequency
in accordance with the arrival status when the arrival status is received.

23. The two-way communication apparatus according to any one of claims 17 to 22, **characterized by** comprising means for providing a sequence number indicative of an order of the encoded data, or transmitting the encoded data in accordance with a format which allows an order of the encoded data to be recognized.

24. The two-way communication apparatus according to any one of claims 17 to 21, **characterized by** comprising:
means for generating error correcting code data from the encoded data with a predetermined unit;
means for outputting at least a portion of at least one of the encoded data and the error correcting code data;
means for receiving at least a portion of at least one of the encoded data and the error correcting code data;
means for recovering lost encoded data from at least one of satisfactorily received encoded data and satisfactorily received error correcting code data when the received encoded data has a loss; and
means for decoding the encoded data.

25. The two-way communication apparatus according to claim 24, **characterized in that** the error correcting code data to be transmitted and the error correcting code data to be received are different from each other in at least one of items including:
A) an error correcting encoding method,
B) existence of transmission of the error correcting code data,
C) a bit rate of the error correcting code data, and
D) a unit of the error correcting code data generation.

26. The two-way communication apparatus according to claim 24 or 25, **characterized by** comprising means for setting at least one of items of the error correcting code data including:
A) an error correcting encoding method,
B) existence of transmission of the error correcting code data,
C) a bit rate of the error correcting code data, and
D) a unit of the error correcting code data generation
by at least one of items including an available band in a transmission line, a data loss pattern in the transmission line, and a user's demand inputted via input means.

27. The two-way communication apparatus according to any one of claims 24 to 26, **characterized by** comprising means for communicating at least one of setting information including:
A) an error correcting encoding method,
B) existence of transmission of the error correcting code data,
C) a bit rate of the error correcting code data, and
D) a unit of the error correcting code data generation
to a correspondent by a call connection process.

28. The two-way communication apparatus according to any one of claims 24 to 27, **characterized by** comprising means for obtaining at least one of setting information of a correspondent including:
A) an error correcting encoding method,
B) existence of transmission of the error correcting code data,
C) a bit rate of the error correcting code data, and
D) a unit of the error correcting code data generation
by a call connection process to recover the encoded data when the encoded data has a loss.

29. The two-way communication apparatus according to any one of claims 24 to 28, **characterized by** comprising:
means for transmitting an arrival status of received data including a loss ratio and a burst length to a correspondent; and
means for resetting at least one of items of error correcting code data to be transmitted including:
A) an error correcting encoding method,
B) existence of transmission of the error correcting code data,
C) a bit rate of the error correcting code data, and
D) a unit of the error correcting code data generation
in accordance with the arrival status when the arrival status is received.

30. The two-way communication apparatus according to any one of claims 24 to 29, **characterized by** comprising:
means for communicating a corresponding relationship of identifiers for identifying the encoded data and the error correcting code data to a correspondent; and
means for providing and transmitting the identifiers corresponding to the encoded data and the error correcting code data.

31. The two-way communication apparatus according to any one of claims 19 to 23, **characterized by** comprising:
means on a transmitting side of the encoded data for changing a break of the interleave unit as means for changing the unit of the interleave process; and
means on a receiving side of the encoded data for varying a size of a buffer for storing the encoded data, increasing the buffer to increase a size of the unit of the interleave process, and changing the size of the buffer to decrease the size of the unit of the interleave process so that interruption of playback signals is reduced.

32. The two-way communication apparatus according to claim 31, **characterized in that** the encoded data include sound encoded data, and the two-way communication apparatus comprises means on the receiving side of the encoded data for conducting reduction from an empty portion if the buffer has the empty portion and conducting reduction from received data that are silent or have a level close to silence if the buffer is filled with received encoded data, whereby interruption of sounds is reduced.

33. A two-way communication system having at least two communication apparatuses for communicating with each other via a transmission line, **characterized in that**:
at least one of the two communication apparatuses comprises:
encoding means for encoding an inputted medium;
interleaving means for performing an interleave process on the encoded data with a predetermined unit; and
transmitting means for transmitting the interleaved encoded data to the transmission line, and
at least another of the two communication apparatuses comprises:
receiving means for receiving the encoded data from the transmission line;
de-interleaving means for rearranging the encoded data that have been subjected to the interleave process and received into an original order with a predetermined method;
decoding means for decoding the encoded data and outputting the decoded data; and
playback means for playing back the decoded data.

34. The two-way communication system according to claim 33, **characterized in that** the encoded data to be transmitted by one of the two communication apparatuses and the encoded data to be received by another of the two communication apparatuses are different from each other in at least one of items including:
A) existence of the interleave process,
B) a unit of the interleave process,
C) an order of the interleaving,
D) a bit rate,
E) a frame rate, and
F) a sampling frequency.

35. The two-way communication system according to claim 33 or 34, **characterized in that** at least one of the two communication apparatuses comprises means for setting at least one of items of the encoded data including:
A) existence of the interleave process,
B) a unit of the interleave process,
C) an order of the interleaving,
D) a frame rate, and
E) a sampling frequency
by at least one of items including:
an available band in a transmission line,
a data loss pattern in the transmission line, and
a user's demand inputted via input means.

36. The two-way communication system according to any one of claims 33 to 35, **characterized in that** at least one of the two communication apparatuses comprises means for communicating at least one of setting information including:
A) existence of the interleave process,
B) a unit of the interleave process,
C) an order of the interleaving,
D) a bit rate,
E) a frame rate, and
F) a sampling frequency
to another correspondent communication apparatus by a call connection process.

37. The two-way communication system according to any one of claims 33 to 36, **characterized in that** at least one of the two communication apparatuses comprises means for obtaining at least one of setting information including:
A) existence of the interleave process,
B) a unit of the interleave process,
C) an order of the interleaving,
D) a bit rate,
E) a frame rate, and
F) a sampling frequency
from another correspondent communication apparatus by a call connection process to decode the received encoded data.

38. The two-way communication system according to any one of claims 33 to 36, **characterized in that** at least one of the two communication apparatuses comprises:
means for transmitting an arrival status of received data including a loss ratio of the received encoded data and a burst length to another correspondent communication apparatus; and
means for resetting at least one of items of encoded data to be transmitted including:
A) existence of the interleave process,
B) a unit of the interleave process,
C) an order of the interleaving,
D) a bit rate,
E) a frame rate, and
F) a sampling frequency
in accordance with the arrival status when the arrival status is received from the other correspondent communication apparatus.

39. The two-way communication system according to any one of claims 36 to 38, **characterized in that** at least one of the two communication apparatuses comprises means for providing a sequence number indicative of an order of the encoded data, or transmitting the encoded data in accordance with a format which allows an order of the encoded data to be recognized.

40. The two-way communication system according to any one of claims 33 to 37, **characterized in that** at least one of the two communication apparatuses comprises:
means for generating error correcting code data from the encoded data with a predetermined unit;
means for outputting at least a portion of at least one of the encoded data and the error correcting code data;
means for receiving at least a portion of at least one of the encoded data and the error correcting code data;
means for recovering lost encoded data from at least one of satisfactorily received encoded data and satisfactorily received error correcting code data when the received encoded data has a loss; and
means for decoding the encoded data.

41. The two-way communication system according to claim 40, **characterized in that** the error correcting code data to be transmitted and the error correcting code data to be received are different from each other in at least one of items including:
A) an error correcting encoding method,
B) existence of transmission of the error correcting code data,
C) a bit rate of the error correcting code data, and
D) a unit of the error correcting code data generation.

42. The two-way communication system according to claim 40 or 41, **characterized in that** at least one of the two communication apparatuses comprises means for setting at least one of items of the error correcting code data including:
A) an error correcting encoding method,
B) existence of transmission of the error correcting code data,
C) a bit rate of the error correcting code data, and
D) a unit of the error correcting code data generation
by at least one of items including:
an available band in a transmission line,
a data loss pattern in the transmission line, and
a user's demand inputted via input means.

43. The two-way communication system according to any one of claims 39 to 42, **characterized in that** at least one of the two communication apparatuses comprises means for communicating at least one of setting information including:
A) an error correcting encoding method,
B) existence of transmission of the error correcting code data,
C) a bit rate of the error correcting code data, and
D) a unit of the error correcting code data generation
to another correspondent communication apparatus by a call connection process.

44. The two-way communication system according to any one of claims 40 to 43, **characterized in that** at least one of the two communication apparatuses comprises means for obtaining at least one of setting information of another correspondent communication apparatus including:
A) an error correcting encoding method,
B) existence of transmission of the error correcting code data,
C) a bit rate of the error correcting code data, and
D) a unit of the error correcting code data generation
by a call connection process to recover the encoded data when the encoded data has a loss.

45. The two-way communication system according to any one of claims 40 to 44, **characterized in that** at least one of the two communication apparatuses comprises:
means for transmitting an arrival status of received data including a loss ratio and a burst length to another correspondent communication apparatus; and
means for resetting at least one of items of error correcting code data to be transmitted including:
A) an error correcting encoding method,
B) existence of transmission of the error correcting code data,
C) a bit rate of the error correcting code data, and
D) a unit of the error correcting code data generation
in accordance with the arrival status when the arrival status is received from the other correspondent communication apparatus.

46. The two-way communication system according to any one of claims 40 to 45, **characterized in that** at least one of the two communication apparatuses comprises:
means for communicating a corresponding relationship of identifiers for identifying the encoded data and the error correcting code data to another correspondent communication apparatus; and
means for providing and transmitting the identifiers corresponding to the encoded data and the error correcting code data.

47. The two-way communication system according to any one of claims 34 to 38, **characterized by** comprising:
means on a transmitting side of the encoded data for changing a break of the interleave unit as means for changing the unit of the interleave process; and
means on a receiving side of the encoded data for varying a size of a buffer for storing the encoded data, increasing the buffer to increase a size of the unit of the interleave process, and changing the size of the buffer to decrease the size of the unit of the interleave process so that interruption of playback signals is reduced.

48. The two-way communication system according to claim 47, **characterized in that** the encoded data include sound encoded data, and the two-way communication system comprises means on the receiving side of the encoded data for conducting reduction from an empty portion if the buffer has the empty portion and conducting reduction from received data that are silent or have a level close to silence if the buffer is filled with received encoded data, whereby interruption of sounds is reduced.

49. A program for executing a procedure with a computer constituting a two-way communication apparatus, the procedure comprising:
a process of encoding an inputted medium;
a process of interleaving the encoded data with a predetermined unit;
a process of outputting the interleaved encoded data;
a process of receiving the encoded data;
a process of de-interleaving the received encoded data with a predetermined method; and
a process of decoding and playing back the encoded data.

50. The program according to claim 49, wherein the encoded data to be transmitted and the encoded data to be received are different from each other in at least one of items including:
A) existence of the interleave process,
B) a unit of the interleave process,
C) an order of the interleaving,
D) a bit rate,
E) a frame rate, and
F) a sampling frequency.

51. The program according to claim 49 or 50, wherein the program executes a procedure with the computer, the procedure comprising a process of setting at least one of items of the encoded data including:
A) existence of the interleave process,
B) a unit of the interleave process,
C) an order of the interleaving,
D) a frame rate, and
E) a sampling frequency
by at least one of items including:
an available band in a transmission line,
a data loss pattern in the transmission line, and
a user's demand inputted via input means.

52. The program according to any one of claims 49 to 51, wherein the program executes a procedure with the computer, the procedure comprising a process of communicating at least one of setting information including:
A) existence of the interleave process,
B) a unit of the interleave process,
C) an order of the interleaving,
D) a bit rate,
E) a frame rate, and
F) a sampling frequency
to a correspondent by a call connection process.

53. The program according to any one of claims 49 to 51, wherein the program executes a procedure with the computer, the procedure comprising a process of obtaining at least one of setting information including:
A) existence of the interleave process,
B) a unit of the interleave process,
C) an order of the interleaving,
D) a bit rate,
E) a frame rate, and
F) a sampling frequency
from a correspondent by a call connection process to decode the received encoded data.

54. The program according to any one of claims 49 to 52, wherein the program executes a procedure with the computer, the procedure comprising:
a process of transmitting an arrival status of received data including a loss ratio of the received encoded data and a burst length to a correspondent; and
a process of resetting at least one of items of encoded data to be transmitted including:
A) existence of the interleave process,
B) a unit of the interleave process,
C) an order of the interleaving,
D) a bit rate,
E) a frame rate, and
F) a sampling frequency
in accordance with the arrival status when the arrival status is received.

55. The program according to any one of claims 49 to 54, wherein the program executes a procedure with the computer, the procedure comprising a process of providing a sequence number indicative of an order of the encoded data, or transmitting the encoded data in accordance with a format which allows an order of the encoded data to be recognized.

56. The program according to any one of claims 49 to 53, wherein the program executes a procedure with the computer, the procedure comprising:
a process of generating error correcting code data from the encoded data with a predetermined unit;
a process of outputting at least a portion of at least one of the encoded data and the error correcting code data;
a process of receiving at least a portion of at least one of the encoded data and the error correcting code data;
a process of recovering lost encoded data from at least one of satisfactorily received encoded data and satisfactorily received error correcting code data when the received encoded data has a loss; and
a process of decoding the encoded data.

57. The program as recited according to claim 56, wherein the error correcting code data to be transmitted and the error correcting code data to be received are different from each other in at least one of items including:
A) an error correcting encoding method,
B) existence of transmission of the error correcting code data,
C) a bit rate of the error correcting code data, and
D) a unit of the error correcting code data generation.

58. The program according to claim 56 or 57, wherein the program executes a procedure with the computer, the procedure comprising a process of setting at least one of items of the error correcting code data including:
A) an error correcting encoding method,
B) existence of transmission of the error correcting code data,
C) a bit rate of the error correcting code data, and
D) a unit of the error correcting code data generation
by at least one of items including:
an available band in a transmission line,
a data loss pattern in the transmission line, and
a user's demand inputted via input means.

59. The program according to any one of claims 56 to 58, wherein the program executes a procedure with the computer, the procedure comprising a process of communicating at least one of setting information including:
A) an error correcting encoding method,
B) existence of transmission of the error correcting code data,
C) a bit rate of the error correcting code data, and
D) a unit of the error correcting code data generation
to a correspondent by a call connection process.

60. The program according to any one of claims 56 to 59, wherein the program executes a procedure with the computer, the procedure comprising a process of obtaining at least one of setting information of a correspondent including:
A) an error correcting encoding method,
B) existence of transmission of the error correcting code data,
C) a bit rate of the error correcting code data, and
D) a unit of the error correcting code data generation
by a call connection process to recover the encoded data when the encoded data has a loss.

61. The program according to any one of claims 56 to 60, wherein the program executes a procedure with the computer, the procedure comprising:
a process of transmitting an arrival status of received data including a loss ratio and a burst length to a correspondent; and
a process of resetting at least one of items of error correcting code data to be transmitted including:
A) an error correcting encoding method,
B) existence of transmission of the error correcting code data,
C) a bit rate of the error correcting code data, and
D) a unit of the error correcting code data generation
in accordance with the arrival status when the arrival status is received from the correspondent.

62. The program according to any one of claims 56 to 61, wherein the program executes a procedure with the computer, the procedure comprising:
a process of communicating a corresponding relationship of identifiers for identifying the encoded data and the error correcting code data to a correspondent; and
a process of providing and transmitting the identifiers corresponding to the encoded data and the error correcting code data.

63. The program according to any one of claims 50 to 54, wherein when the unit of the interleave process is changed, the program executes a procedure with the computer, the procedure comprising:
a process of changing a break of the interleave unit on a transmitting side of the encoded data; and
a process of varying a size of a buffer for storing the encoded data, increasing the buffer to increase a size of the unit of the interleave process, and changing the size of the buffer to decrease the size of the unit of the interleave process so that interruption of playback signals is reduced, on a receiving side of the encoded data.

64. The program according to any one of claims 49 to 54, wherein the encoded data include sound encoded data, and the program executes a procedure with the computer, the procedure comprising a process of conducting reduction from an empty portion if the buffer has the empty portion, and conducting reduction from received data that are silent or have a level close to silence if the buffer is filled with received encoded data, on the receiving side of the encoded data, whereby interruption of sounds is reduced.

65. A communication system **characterized by** comprising:
medium capturing means for capturing a medium signal;
medium encoding means for encoding the captured medium data;
interleaving means for rearranging the data encoded by the medium encoding means;
transmitting means for transmitting the encoded data outputted from the interleaving means to a transmission line;
receiving means for receiving the encoded data from the transmission line;
de-interleaving means for rearranging the received encoded data into an original order;
medium decoding means for decoding the encoded data rearranged by the de-interleaving means;
means for playing back the medium data decoded by the medium decoding means;
means for variably setting at least one of encoding setting of the medium encoding means, interleave process setting of the interleaving means, and transmission setting of the transmitting means; and
means for communicating at least one of the encoding setting, the interleave process setting, the transmission setting, and a receiving status of the encoded data to a correspondent.

66. A communication system **characterized by** comprising:
medium capturing means for capturing a medium signal;
medium encoding means for encoding the captured medium data;
error correcting encoding means for generating error correcting code data in response to the encoded data from the medium encoding means;
transmitting means for transmitting the encoded data and the error correcting code data to a transmission line;
receiving means for receiving the encoded data and the error correcting code data from the transmission line;
error correcting decoding means for recovering encoded data with the error correcting code when the received encoded data have an error or a missing part;
medium decoding means for decoding the received encoded data or the recovered encoded data;
means for playing back the decoded medium data;
means for variably setting at least one of encoding setting of the medium encoding means, error correcting code data generation process setting, and transmission setting of the transmitting means; and
means for communicating at least one of the encoding setting, the error correcting code data generation process setting, the transmission setting, and a receiving status of the encoded data to a correspondent.

67. The communication system according to claim 66, **characterized by** comprising means for transmitting the encoded data and the error correcting code data via separate sessions or separate transmission lines.

68. The communication system according to claim 65, **characterized by** comprising:
means for changing a break of an interleave unit as the interleave process setting in the interleaving means; and
means for varying a size of a buffer for storing the encoded data, increasing the buffer to increase a size of the unit of the interleave process, and changing the size of the buffer to decrease the size of the unit of the interleave process so that interruption of playback signals is reduced, as the de-interleaving means.

69. The communication system according to claim 68, **characterized in that** the encoded data include sound encoded data, and the two-way communication system comprises means on a receiving side of the encoded data for conducting reduction from an empty portion if the buffer has the empty portion and conducting reduction from received data that are silent or have a level close to silence if the buffer is filled with received encoded data, whereby interruption of sounds is reduced.

## Amended claims

### Amended claims under Art. 19.1 PCT

1. **(Amended)** A two-way communication method **characterized by** comprising:
a step of encoding an inputted medium;
a step of interleaving the encoded data with a predetermined unit;
a step of outputting the interleaved encoded data;
a step of receiving the encoded data;
a step of de-interleaving the received encoded data with a predetermined method; and
a step of decoding and playing back the encoded data,
wherein the encoded data to be transmitted and the encoded data to be received are different from each other in at least one of items including:
A) existence of the interleave process,
B) a unit of the interleave process,
C) an order of the interleaving,
D) a bit rate,
E) a frame rate, and
F) a sampling frequency.

2. **(Deleted)**

3. **(Amended)** The two-way communication method according to claim 1, **characterized in that** at least one of items of the encoded data including:
A) existence of the interleave process,
B) a unit of the interleave process,
C) an order of the interleaving,
D) a frame rate, and
E) a sampling frequency
is set by at least one of items including:
an available band in a transmission line,
a data loss pattern in the transmission line, and
a user's demand inputted via input means.

4. **(Amended)** The two-way communication method according to any one of claims 1 to 3, **characterized in that** at least one of setting information including:
A) existence of the interleave process,
B) a unit of the interleave process,
C) an order of the interleaving,
D) a bit rate,
E) a frame rate, and
F) a sampling frequency
is communicated to a correspondent by a call connection process.

5. **(Amended)** The two-way communication method according to any one of claims 1, 3, or 4, **characterized in that** at least one of setting information including:
A) existence of the interleave process,
B) a unit of the interleave process,
C) an order of the interleaving,
D) a bit rate,
E) a frame rate, and
F) a sampling frequency
is obtained from a correspondent by a call connection process to decode the received encoded data.

6. **(Amended)** The two-way communication method according to any one of claims 1, 3, or 4, **characterized in that** an arrival status of received data including a loss ratio of the received encoded data and a burst length is transmitted to a correspondent, and
at least one of items of encoded data to be transmitted including:
A) existence of the interleave process,
B) a unit of the interleave process,
C) an order of the interleaving,
D) a bit rate,
E) a frame rate, and
F) a sampling frequency
is reset in accordance with the arrival status when the arrival status is received.

7. **(Amended)** The two-way communication method according to any one of claims 1, 3 to 6, **characterized in that** a sequence number indicative of an order of the encoded data is provided, or the encoded data is transmitted in accordance with a format which allows an order of the encoded data to be recognized.

8. **(Amended)** The two-way communication method according to any one of claims 1, 3 to 5, **characterized by** comprising:
a step of generating error correcting code data from the encoded data with a predetermined unit;
a step of outputting at least a portion of at least one of the encoded data and the error correcting code data;
a step of receiving at least a portion of at least one of the encoded data and the error correcting code data;
a step of recovering lost encoded data from at least one of satisfactorily received encoded data and satisfactorily received error correcting code data when the received encoded data has a loss; and
a step of decoding the encoded data.

9. The two-way communication method according to claim 8, **characterized in that** the error correcting code data to be transmitted and the error correcting code data to be received are different from each other in at least one of items including:
A) an error correcting encoding method,
B) existence of transmission of the error correcting code data,
C) a bit rate of the error correcting code data, and
D) a unit of the error correcting code data generation.

10. The two-way communication method according to claim 8 or 9, **characterized in that** at least one of items of the error correcting code data including:
A) an error correcting encoding method,
B) existence of transmission of the error correcting code data,
C) a bit rate of the error correcting code data, and
D) a unit of the error correcting code data generation
is set by at least one of items including:
an available band in a transmission line,
a data loss pattern in the transmission line, and
a user's demand inputted via input means.

11. The two-way communication method according to any one of claims 8 to 10, **characterized in that** at least one of setting information including:
A) an error correcting encoding method,
B) existence of transmission of the error correcting code data,
C) a bit rate of the error correcting code data, and
D) a unit of the error correcting code data generation
is communicated to a correspondent by a call connection process.

12. The two-way communication method according to any one of claims 8 to 11, **characterized in that** at least one of setting information of a correspondent including:
A) an error correcting encoding method,
B) existence of transmission of the error correcting code data,
C) a bit rate of the error correcting code data, and
D) a unit of the error correcting code data generation
is obtained by a call connection process to recover the encoded data when the encoded data has a loss.

13. The two-way communication method according to any one of claims 8 to 12, **characterized in that** an arrival status of received data including a loss ratio and a burst length is transmitted to a correspondent, and
at least one of items of error correcting code data to be transmitted including:
A) an error correcting encoding method,
B) existence of transmission of the error correcting code data,
C) a bit rate of the error correcting code data, and
D) a unit of the error correcting code data generation
is reset in accordance with the arrival status when the arrival status is received.

14. The two-way communication method according to any one of claims 8 to 13, **characterized in that** a corresponding relationship of identifiers for identifying the encoded data and the error correcting code data is communicated to a correspondent, and
the identifiers corresponding to the encoded data and the error correcting code data are provided and transmitted.

15. **(Amended)** The two-way communication method according to any one of claims 3 to 6, **characterized in that** when the unit of the interleave process is changed,
on a transmitting side of the encoded data, a break of the interleave unit is changed, and
on a receiving side of the encoded data, a size of a buffer for storing the encoded data is varied, the buffer is increased to increase a size of the unit of the interleave process, and the size of the buffer is changed to decrease the size of the unit of the interleave process so that interruption of playback signals is reduced.

16. The two-way communication method according to claim 15, **characterized in that** the encoded data include sound encoded data, and
on the receiving side of the encoded data, if the buffer has an empty portion, then reduction is conducted from the empty portion, and if the buffer is filled with received encoded data, then reduction is conducted from received data that are silent or have a level close to silence, whereby interruption of sounds is reduced.

17. **(Amended)** A two-way communication apparatus **characterized by** comprising:
encoding means for encoding and outputting an inputted medium;
interleaving means for performing an interleave process on the encoded data from the encoding means with a predetermined unit;
transmitting means for transmitting the encoded data rearranged by the interleaving means;
receiving means for receiving the encoded data;
de-interleaving means for rearranging the encoded data that have been subjected to the interleave process and received by the receiving means into an original order;
decoding means for decoding the encoded data from the de-interleaving means and outputting the decoded data; and
playback means for playing back the decoded data from the decoding means,
wherein the encoded data to be transmitted and the encoded data to be received are different from each other in at least one of items including:
A) existence of the interleave process,
B) a unit of the interleave process,
C) an order of the interleaving,
D) a bit rate,
E) a frame rate, and
F) a sampling frequency.

18. (Deleted)

19. **(Amended)** The two-way communication apparatus according to claim 17, **characterized in that** at least one of items of the encoded data including:
A) existence of the interleave process,
B) a unit of the interleave process,
C) an order of the interleaving,
D) a frame rate, and
E) a sampling frequency
is set by at least one of items including:
an available band in a transmission line,
a data loss pattern in the transmission line, and
a user's demand inputted via input means.

20. **(Amended)** The two-way communication apparatus according to claims 17 or 19, **characterized by** comprising means for communicating at least one of setting information including:
A) existence of the interleave process,
B) a unit of the interleave process,
C) an order of the interleaving,
D) a bit rate,
E) a frame rate, and
F) a sampling frequency
to a correspondent by a call connection process.

21. **(Amended)** The two-way communication apparatus according to any one of claims 17, 19 or 20, **characterized by** comprising means for obtaining at least one of setting information including:
A) existence of the interleave process,
B) a unit of the interleave process,
C) an order of the interleaving,
D) a bit rate,
E) a frame rate, and
F) a sampling frequency
from a correspondent by a call connection process to decode the received encoded data.

22. **(Amended)** The two-way communication apparatus according to any one of claims 17, 19, or 20, **characterized by** comprising:
means for transmitting an arrival status of received data including a loss ratio of the received encoded data and a burst length to a correspondent; and
means for resetting at least one of items of encoded data to be transmitted including:
A) existence of the interleave process,
B) a unit of the interleave process,
C) an order of the interleaving,
D) a bit rate,
E) a frame rate, and
F) a sampling frequency
in accordance with the arrival status when the arrival status is received.

23. **(Amended)** The two-way communication apparatus according to any one of claims 17, 19 to 22, **characterized by** comprising means for providing a sequence number indicative of an order of the encoded data, or transmitting the encoded data in accordance with a format which allows an order of the encoded data to be recognized.

24. **(Amended)** The two-way communication apparatus according to any one of claims 17, 19 to 21, **characterized by** comprising:
means for generating error correcting code data from the encoded data with a predetermined unit;
means for outputting at least a portion of at least one of the encoded data and the error correcting code data;
means for receiving at least a portion of at least one of the encoded data and the error correcting code data;
means for recovering lost encoded data from at least one of satisfactorily received encoded data and satisfactorily received error correcting code data when the received encoded data has a loss; and
means for decoding the encoded data.

25. The two-way communication apparatus according to claim 24, **characterized in that** the error correcting code data to be transmitted and the error correcting code data to be received are different from each other in at least one of items including:
A) an error correcting encoding method,
B) existence of transmission of the error correcting code data,
C) a bit rate of the error correcting code data, and
D) a unit of the error correcting code data generation.

26. The two-way communication apparatus according to claim 24 or 25, **characterized by** comprising means for setting at least one of items of the error correcting code data including:
A) an error correcting encoding method,
B) existence of transmission of the error correcting code data,
C) a bit rate of the error correcting code data, and
D) a unit of the error correcting code data generation
by at least one of items including an available band in a transmission line, a data loss pattern in the transmission line, and a user's demand inputted via input means.

27. The two-way communication apparatus according to any one of claims 24 to 26, **characterized by** comprising means for communicating at least one of setting information including:
A) an error correcting encoding method,
B) existence of transmission of the error correcting code data,
C) a bit rate of the error correcting code data, and
D) a unit of the error correcting code data generation
to a correspondent by a call connection process.

28. The two-way communication apparatus according to any one of claims 24 to 27, **characterized by** comprising means for obtaining at least one of setting information of a correspondent including:
A) an error correcting encoding method,
B) existence of transmission of the error correcting code data,
C) a bit rate of the error correcting code data, and
D) a unit of the error correcting code data generation
by a call connection process to recover the encoded data when the encoded data has a loss.

29. The two-way communication apparatus according to any one of claims 24 to 28, **characterized by** comprising:
means for transmitting an arrival status of received data including a loss ratio and a burst length to a correspondent; and
means for resetting at least one of items of error correcting code data to be transmitted including:
A) an error correcting encoding method,
B) existence of transmission of the error correcting code data,
C) a bit rate of the error correcting code data, and
D) a unit of the error correcting code data generation
in accordance with the arrival status when the arrival status is received.

30. The two-way communication apparatus according to any one of claims 24 to 29, **characterized by** comprising:
means for communicating a corresponding relationship of identifiers for identifying the encoded data and the error correcting code data to a correspondent; and
means for providing and transmitting the identifiers corresponding to the encoded data and the error correcting code data.

31. The two-way communication apparatus according to any one of claims 19 to 23, **characterized by** comprising:
means on a transmitting side of the encoded data for changing a break of the interleave unit as means for changing the unit of the interleave process; and
means on a receiving side of the encoded data for varying a size of a buffer for storing the encoded data, increasing the buffer to increase a size of the unit of the interleave process, and changing the size of the buffer to decrease the size of the unit of the interleave process so that interruption of playback signals is reduced.

32. The two-way communication apparatus according to claim 31, **characterized in that** the encoded data include sound encoded data, and the two-way communication apparatus comprises means on the receiving side of the encoded data for conducting reduction from an empty portion if the buffer has the empty portion and conducting reduction from received data that are silent or have a level close to silence if the buffer is filled with received encoded data, whereby interruption of sounds is reduced.

33. **(Amended)** A two-way communication system having at least two communication apparatuses for communicating with each other via a transmission line, **characterized in that**:
at least one of the two communication apparatuses comprises:
encoding means for encoding an inputted medium;
interleaving means for performing an interleave process on the encoded data with a predetermined unit; and
transmitting means for transmitting the interleaved encoded data to the transmission line,
at least another of the two communication apparatuses comprises:
receiving means for receiving the encoded data from the transmission line;
de-interleaving means for rearranging the encoded data that have been subjected to the interleave process and received into an original order with a predetermined method;
decoding means for decoding the encoded data and outputting the decoded data; and
playback means for playing back the decoded data, and
the encoded data to be transmitted by one of the two communication apparatuses and the encoded data to be received by another of the two communication apparatuses are different from each other in at least one of items including:
A) existence of the interleave process,
B) a unit of the interleave process,
C) an order of the interleaving,
D) a bit rate,
E) a frame rate, and
F) a sampling frequency.

34. **(Deleted)**

35. **(Amended)** The two-way communication system according to claim 33, **characterized in that** at least one of the two communication apparatuses comprises means for setting at least one of items of the encoded data including:
A) existence of the interleave process,
B) a unit of the interleave process,
C) an order of the interleaving,
D) a frame rate, and
E) a sampling frequency
by at least one of items including:
an available band in a transmission line,
a data loss pattern in the transmission line, and
a user's demand inputted via input means.

36. **(Amended)** The two-way communication system according to claims 33 or 35, **characterized in that** at least one of the two communication apparatuses comprises means for communicating at least one of setting information including:
A) existence of the interleave process,
B) a unit of the interleave process,
C) an order of the interleaving,
D) a bit rate,
E) a frame rate, and
F) a sampling frequency
to another correspondent communication apparatus by a call connection process.

37. **(Amended)** The two-way communication system according to any one of claims 33, 35 or 36, **characterized in that** at least one of the two communication apparatuses comprises means for obtaining at least one of setting information including:
A) existence of the interleave process,
B) a unit of the interleave process,
C) an order of the interleaving,
D) a bit rate,
E) a frame rate, and
F) a sampling frequency
from another correspondent communication apparatus by a call connection process to decode the received encoded data.

38. **(Amended)** The two-way communication system according to any one of claims 33, 35 or 36, **characterized in that** at least one of the two communication apparatuses comprises:
means for transmitting an arrival status of received data including a loss ratio of the received encoded data and a burst length to another correspondent communication apparatus; and
means for resetting at least one of items of encoded data to be transmitted including:
A) existence of the interleave process,
B) a unit of the interleave process,
C) an order of the interleaving,
D) a bit rate,
E) a frame rate, and
F) a sampling frequency
in accordance with the arrival status when the arrival status is received from the other correspondent communication apparatus.

39. The two-way communication system according to any one of claims 36 to 38, **characterized in that** at least one of the two communication apparatuses comprises means for providing a sequence number indicative of an order of the encoded data, or transmitting the encoded data in accordance with a format which allows an order of the encoded data to be recognized.

40. **(Amended)** The two-way communication system according to any one of claims 33, 34 to 37, **characterized in that** at least one of the two communication apparatuses comprises:
means for generating error correcting code data from the encoded data with a predetermined unit;
means for outputting at least a portion of at least one of the encoded data and the error correcting code data;
means for receiving at least a portion of at least one of the encoded data and the error correcting code data;
means for recovering lost encoded data from at least one of satisfactorily received encoded data and satisfactorily received error correcting code data when the received encoded data has a loss; and
means for decoding the encoded data.

41. The two-way communication system according to claim 40, **characterized in that** the error correcting code data to be transmitted and the error correcting code data to be received are different from each other in at least one of items including:
A) an error correcting encoding method,
B) existence of transmission of the error correcting code data,
C) a bit rate of the error correcting code data, and
D) a unit of the error correcting code data generation.

42. The two-way communication system according to claim 40 or 41, **characterized in that** at least one of the two communication apparatuses comprises means for setting at least one of items of the error correcting code data including:
A) an error correcting encoding method,
B) existence of transmission of the error correcting code data,
C) a bit rate of the error correcting code data, and
D) a unit of the error correcting code data generation
by at least one of items including:
an available band in a transmission line,
a data loss pattern in the transmission line, and
a user's demand inputted via input means.

43. The two-way communication system according to any one of claims 39 to 42, **characterized in that** at least one of the two communication apparatuses comprises means for communicating at least one of setting information including:
A) an error correcting encoding method,
B) existence of transmission of the error correcting code data,
C) a bit rate of the error correcting code data, and
D) a unit of the error correcting code data generation
to another correspondent communication apparatus by a call connection process.

44. The two-way communication system according to any one of claims 40 to 43, **characterized in that** at least one of the two communication apparatuses comprises means for obtaining at least one of setting information of another correspondent communication apparatus including:
A) an error correcting encoding method,
B) existence of transmission of the error correcting code data,
C) a bit rate of the error correcting code data, and
D) a unit of the error correcting code data generation
by a call connection process to recover the encoded data when the encoded data has a loss.

45. The two-way communication system according to any one of claims 40 to 44, **characterized in that** at least one of the two communication apparatuses comprises:
means for transmitting an arrival status of received data including a loss ratio and a burst length to another correspondent communication apparatus; and
means for resetting at least one of items of error correcting code data to be transmitted including:
A) an error correcting encoding method,
B) existence of transmission of the error correcting code data,
C) a bit rate of the error correcting code data, and
D) a unit of the error correcting code data generation
in accordance with the arrival status when the arrival status is received from the other correspondent communication apparatus.

46. The two-way communication system according to any one of claims 40 to 45, **characterized in that** at least one of the two communication apparatuses comprises:
means for communicating a corresponding relationship of identifiers for identifying the encoded data and the error correcting code data to another correspondent communication apparatus; and
means for providing and transmitting the identifiers corresponding to the encoded data and the error correcting code data.

47. **(Amended)** The two-way communication system according to any one of claims 35 to 38, **characterized by** comprising:
means on a transmitting side of the encoded data for changing a break of the interleave unit as means for changing the unit of the interleave process; and
means on a receiving side of the encoded data for varying a size of a buffer for storing the encoded data, increasing the buffer to increase a size of the unit of the interleave process, and changing the size of the buffer to decrease the size of the unit of the interleave process so that interruption of playback signals is reduced.

48. The two-way communication system according to claim 47, **characterized in that** the encoded data include sound encoded data, and the two-way communication system comprises means on the receiving side of the encoded data for conducting reduction from an empty portion if the buffer has the empty portion and conducting reduction from received data that are silent or have a level close to silence if the buffer is filled with received encoded data, whereby interruption of sounds is reduced.

49. (Amended) A program for executing a procedure with a computer constituting a two-way communication apparatus, the procedure comprising:
a process of encoding an inputted medium;
a process of interleaving the encoded data with a predetermined unit;
a process of outputting the interleaved encoded data;
a process of receiving the encoded data;
a process of de-interleaving the received encoded data with a predetermined method; and
a process of decoding and playing back the encoded data,
wherein the encoded data to be transmitted and the encoded data to be received are different from each other in at least one of items including:
A) existence of the interleave process,
B) a unit of the interleave process,
C) an order of the interleaving,
D) a bit rate,
E) a frame rate, and
F) a sampling frequency.

50. **(Deleted)**

51. **(Amended)** The program according to claim 49, wherein the program executes a procedure with the computer, the procedure comprising a process of setting at least one of items of the encoded data including:
A) existence of the interleave process,
B) a unit of the interleave process,
C) an order of the interleaving,
D) a frame rate, and
E) a sampling frequency
by at least one of items including:
an available band in a transmission line,
a data loss pattern in the transmission line, and
a user's demand inputted via input means.

52. **(Amended)** The program according to claims 49 or 51, wherein the program executes a procedure with the computer, the procedure comprising a process of communicating at least one of setting information including:
A) existence of the interleave process,
B) a unit of the interleave process,
C) an order of the interleaving,
D) a bit rate,
E) a frame rate, and
F) a sampling frequency
to a correspondent by a call connection process.

53. **(Amended)** The program according to claims 49 or 51, wherein the program executes a procedure with the computer, the procedure comprising a process of obtaining at least one of setting information including:
A) existence of the interleave process,
B) a unit of the interleave process,
C) an order of the interleaving,
D) a bit rate,
E) a frame rate, and
F) a sampling frequency
from a correspondent by a call connection process to decode the received encoded data.

54. **(Amended)** The program according to any one of claims 49, 51, or 52, wherein the program executes a procedure with the computer, the procedure comprising:
a process of transmitting an arrival status of received data including a loss ratio of the received encoded data and a burst length to a correspondent; and
a process of resetting at least one of items of encoded data to be transmitted including:
A) existence of the interleave process,
B) a unit of the interleave process,
C) an order of the interleaving,
D) a bit rate,
E) a frame rate, and
F) a sampling frequency
in accordance with the arrival status when the arrival status is received.

55. **(Amended)** The program according to any one of claims 49, 51 to 54, wherein the program executes a procedure with the computer, the procedure comprising a process of providing a sequence number indicative of an order of the encoded data, or transmitting the encoded data in accordance with a format which allows an order of the encoded data to be recognized.

56. **(Amended)** The program according to any one of claims 49, 51 to 53, wherein the program executes a procedure with the computer, the procedure comprising:
a process of generating error correcting code data from the encoded data with a predetermined unit;
a process of outputting at least a portion of at least one of the encoded data and the error correcting code data;
a process of receiving at least a portion of at least one of the encoded data and the error correcting code data;
a process of recovering lost encoded data from at least one of satisfactorily received encoded data and satisfactorily received error correcting code data when the received encoded data has a loss; and
a process of decoding the encoded data.

57. The program as recited according to claim 56, wherein the error correcting code data to be transmitted and the error correcting code data to be received are different from each other in at least one of items including:
A) an error correcting encoding method,
B) existence of transmission of the error correcting code data,
C) a bit rate of the error correcting code data, and
D) a unit of the error correcting code data generation.

58. The program according to claim 56 or 57, wherein the program executes a procedure with the computer, the procedure comprising a process of setting at least one of items of the error correcting code data including:
A) an error correcting encoding method,
B) existence of transmission of the error correcting code data,
C) a bit rate of the error correcting code data, and
D) a unit of the error correcting code data generation
by at least one of items including:
an available band in a transmission line,
a data loss pattern in the transmission line, and
a user's demand inputted via input means.

59. The program according to any one of claims 56 to 58, wherein the program executes a procedure with the computer, the procedure comprising a process of communicating at least one of setting information including:
A) an error correcting encoding method,
B) existence of transmission of the error correcting code data,
C) a bit rate of the error correcting code data, and
D) a unit of the error correcting code data generation
to a correspondent by a call connection process.

60. The program according to any one of claims 56 to 59, wherein the program executes a procedure with the computer, the procedure comprising a process of obtaining at least one of setting information of a correspondent including:
A) an error correcting encoding method,
B) existence of transmission of the error correcting code data,
C) a bit rate of the error correcting code data, and
D) a unit of the error correcting code data generation
by a call connection process to recover the encoded data when the encoded data has a loss.

61. The program according to any one of claims 56 to 60, wherein the program executes a procedure with the computer, the procedure comprising:
a process of transmitting an arrival status of received data including a loss ratio and a burst length to a correspondent; and
a process of resetting at least one of items of error correcting code data to be transmitted including:
A) an error correcting encoding method,
B) existence of transmission of the error correcting code data,
C) a bit rate of the error correcting code data, and
D) a unit of the error correcting code data generation
in accordance with the arrival status when the arrival status is received from the correspondent.

62. The program according to any one of claims 56 to 61, wherein the program executes a procedure with the computer, the procedure comprising:
a process of communicating a corresponding relationship of identifiers for identifying the encoded data and the error correcting code data to a correspondent; and
a process of providing and transmitting the identifiers corresponding to the encoded data and the error correcting code data.

63. (Amended) The program according to any one of claims 51 to 54, wherein when the unit of the interleave process is changed, the program executes a procedure with the computer, the procedure comprising:
a process of changing a break of the interleave unit on a transmitting side of the encoded data; and
a process of varying a size of a buffer for storing the encoded data, increasing the buffer to increase a size of the unit of the interleave process, and changing the size of the buffer to decrease the size of the unit of the interleave process so that interruption of playback signals is reduced, on a receiving side of the encoded data.

64. The program according to any one of claims 49 to 54, wherein the encoded data include sound encoded data, and the program executes a procedure with the computer, the procedure comprising a process of conducting reduction from an empty portion if the buffer has the empty portion, and conducting reduction from received data that are silent or have a level close to silence if the buffer is filled with received encoded data, on the receiving side of the encoded data, whereby interruption of sounds is reduced.

65. A communication system **characterized by** comprising:
medium capturing means for capturing a medium signal;
medium encoding means for encoding the captured medium data;
interleaving means for rearranging the data encoded by the medium encoding means;
transmitting means for transmitting the encoded data outputted from the interleaving means to a transmission line;
receiving means for receiving the encoded data from the transmission line;
de-interleaving means for rearranging the received encoded data into an original order;
medium decoding means for decoding the encoded data rearranged by the de-interieaving means;
means for playing back the medium data decoded by the medium decoding means;
means for variably setting at least one of encoding setting of the medium encoding means, interleave process setting of the interleaving means, and transmission setting of the transmitting means; and
means for communicating at least one of the encoding setting, the interleave process setting, the transmission setting, and a receiving status of the encoded data to a correspondent.

66. A communication system **characterized by** comprising:
medium capturing means for capturing a medium signal;
medium encoding means for encoding the captured medium data;
error correcting encoding means for generating error correcting code data in response to the encoded data from the medium encoding means;
transmitting means for transmitting the encoded data and the error correcting code data to a transmission line;
receiving means for receiving the encoded data and the error correcting code data from the transmission line;
error correcting decoding means for recovering encoded data with the error correcting code when the received encoded data have an error or a missing part;
medium decoding means for decoding the received encoded data or the recovered encoded data;
means for playing back the decoded medium data;
means for variably setting at least one of encoding setting of the medium encoding means, error correcting code data generation process setting, and transmission setting of the transmitting means; and
means for communicating at least one of the encoding setting, the error correcting code data generation process setting, the transmission setting, and a receiving status of the encoded data to a correspondent.

67. The communication system according to claim 66, **characterized by** comprising means for transmitting the encoded data and the error correcting code data via separate sessions or separate transmission lines.

68. The communication system according to claim 65, **characterized by** comprising:
means for changing a break of an interleave unit as the interleave process setting in the interleaving means; and
means for varying a size of a buffer for storing the encoded data, increasing the buffer to increase a size of the unit of the interleave process, and changing the size of the buffer to decrease the size of the unit of the interleave process so that interruption of playback signals is reduced, as the de-interleaving means.

69. The communication system according to claim 68, **characterized in that** the encoded data include sound encoded data, and the two-way communication system comprises means on a receiving side of the encoded data for conducting reduction from an empty portion if the buffer has the empty portion and conducting reduction from received data that are silent or have a level close to silence if the buffer is filled with received encoded data, whereby interruption of sounds is reduced.
